# FASCICULE DE BREVET EUROPEEN

(11) **EP 3 785 488 B1**
(45) Date de publication et mention de la délivrance du brevet: **22.12.2021**
(21) Numéro de dépôt: 19722031.2
(22) Date de dépôt: 26.04.2019
(51) Int. Cl.: H05B 3/82, F02M 25/022, F01N 3/20, F28F 3/12, F28D 1/06

(54) **DISPOSITIF DE CHAUFFAGE BI-ENERGIE POUR RESERVOIR DE PRODUITS AQUEUX**
ZWEIENERGIE-HEIZVORRICHTUNG FÜR WASSERPRODUKTRESERVOIR
TWO-ENERGY HEATING DEVICE FOR AQUEOUS PRODUCT RESERVOIR

(30) Priorité: 26.07.2018 FR 1856966; 27.04.2018 FR 1853753
(43) Date de publication de la demande: 03.03.2021
(73) Titulaire: Plastic Omnium Advanced Innovation And Research, 1130 Bruxelles (BE)
(72) Inventeur: DHAUSSY, Franck, 60280 MARGNY-LES-COMPIEGNE (FR); OSZWALD, Pierre, 60350 BERNEUIL-SUR-AISNE (FR); LECRIVAIN, Franck, 60127 FRESNOY-LA-RIVIERE (FR); LEONARD, Stéphane, 1090 BRUXELLES (BE); DUEZ, Laurent, 1180 UCCLE (BE)
(74) Mandataire: LLR
(86) Numéro de dépôt international: PCT/EP2019/060798
(87) Numéro de publication internationale: WO 2019/207134

(56) Documents cités:
- WO-A1-2015/181225
- WO-A1-2018/050895
- DE-A1-102008 044 001
- FR-A1- 2 775 066
- US-A1- 2015 377 112

## Description

La présente invention concerne, de façon générale, le domaine technique des réservoirs de stockage d'un produit aqueux configurés pour délivrer un produit aqueux à un dispositif de consommation de produits aqueux d'un véhicule, en particulier automobile.

L'invention concerne un réservoir de stockage d'un produit aqueux.

Dans un véhicule thermique du type à moteur à injection, il est connu d'injecter un produit aqueux dans le circuit d'admission d'air du moteur. Dans cet exemple, le moteur thermique est un dispositif de consommation de produit aqueux. Ce produit aqueux est généralement de l'eau déminéralisée qui, en se mélangeant au gaz d'admission, permet de réduire la température du mélange air-carburant à l'entrée de la chambre de combustion du moteur à injection. On obtient ainsi une meilleure résistance à la compression des moteurs à essence et une meilleure combustion dans les moteurs diesel. L'eau a également un effet de refroidissement des pièces internes du moteur tels que les pistons et les cylindres. Il en résulte une réduction de la pollution (particules imbrûlées, CO, NOx) et une économie de carburant pouvant atteindre 25 % en usage intensif. Un tel système d'injection est décrit dans le document de brevet FR2801076 A1.

Dans un véhicule thermique du type à moteur diesel, il est connu d'injecter un produit aqueux dans les gaz d'échappement du moteur, en amont d'un catalyseur SCR, afin de réduire les émissions de NOx. Dans cet exemple, le catalyseur SCR est un dispositif de consommation de produit aqueux. Ce produit aqueux est généralement une solution aqueuse d'urée comme par exemple de l'AdBlue (marque déposée). Un tel système d'injection est décrit dans les documents de brevet EP381236 A1 et WO9736676 A1.

Dans un véhicule électrique du type à pile à combustible, il est connu de produire de l'électricité à partir d'une solution aqueuse d'urée. Dans le cas d'un véhicule électrique du type à pile à combustible à hydrogène, l'urée sert à produire de l'hydrogène par électrolyse de l'urée dans un électrolyseur. Dans cet exemple, l'électrolyseur est un dispositif de consommation de produit aqueux et le produit aqueux est de l'urée. Une telle pile à combustible est décrite dans le document de brevet US2009095636 A1. Dans le cas d'un véhicule électrique du type à pile à combustible à ammoniac, l'urée sert à produire de l'ammoniac par hydrolyse dans un réacteur d'hydrolyse. Dans cet exemple, le réacteur d'hydrolyse est un dispositif de consommation de produit aqueux et le produit aqueux est de l'urée. Une telle pile à combustible est décrite dans le document de brevet WO2018055175 A1. Dans le cas d'un véhicule électrique du type à pile à combustible à urée, l'urée sert à produire directement de l'électricité dans la pile à combustible. Dans cet exemple, la pile à combustible est un dispositif de consommation de produit aqueux où le produit aqueux est de l'urée. Une telle pile à combustible est décrite dans le document de brevet EP2433327 A1.

On comprend d'après les exemples précédents que, quel que soit le type de moteur utilisé, le véhicule équipé d'un tel moteur doit être capable d'embarquer une certaine quantité de produit aqueux, quantité directement proportionnelle à l'autonomie (en kilomètres) recherchée. Pour ce faire, des réservoirs de stockage de produits aqueux sont montés dans les véhicules.

Par l'expression "produits aqueux", on entend désigner des produits qui contiennent de l'eau, ce qui exclut l'essence et le diesel et autres carburants issus du raffinage du pétrole brut. Par l'expression "produits aqueux", on entend aussi désigner des produits solubles dans l'eau comme par exemple l'alcool.

Pour remplir un réservoir de stockage d'un produit aqueux, on utilise un produit aqueux sous forme liquide, c'est sous cette forme qu'il est généralement délivré à un dispositif de consommation de produits aqueux d'un véhicule. On sait par ailleurs que dans certaines conditions de température et de pression, les produits aqueux gèlent. De l'eau gelée ou de l'urée gelée dans un réservoir de stockage d'un véhicule ne peut pas être délivrée à un dispositif de consommation de produits aqueux d'un véhicule. Ce scénario se produit généralement en hiver et dans les pays froids.

Pour remédier à ce problème, il existe des dispositifs de chauffage pour dégeler un produit aqueux contenu dans un réservoir de stockage. En particulier, il est connu de dégeler un produit aqueux contenu dans un réservoir de stockage grâce à une source de chauffage bi-énergie où la première source de chauffage provient d'un circuit de chauffage hydraulique raccordé à un circuit de liquide de refroidissement du véhicule et où la deuxième source de chauffage provient d'un circuit de chauffage électrique branché à une source d'énergie électrique du véhicule. Un tel dispositif de chauffage est décrit dans le document de brevet WO2018050895 A1.

Les dispositifs de chauffage bi-énergie connus présentent l'inconvénient d'être encombrants et difficile à positionner de façon optimale. En effet, chacun des deux circuits de chauffage occupe son propre volume dans le réservoir de stockage ce qui nécessite de savoir les positionner correctement l'un par rapport à l'autre pour éviter toute interaction négative, en plus de savoir les positionner correctement l'un et l'autre dans le réservoir pour optimiser l'échange thermique entre le dispositif de chauffage bi-énergie et le produit aqueux. Ceci n'est pas satisfaisant. De plus, le circuit de chauffage hydraulique, à l'instar du circuit de chauffage électrique, est souvent un tube en spirale ou en serpentin qui n'offre qu'une surface limitée d'échange thermique avec le produit aqueux. Au surplus, les dispositifs de chauffage bi-énergie connus ne permettent pas de combiner librement l'énergie fournie par le circuit de chauffage hydraulique et l'énergie fournie par le circuit de chauffage électrique.

Un autre problème existe avec les réservoirs de produit aqueux pour véhicule automobile. Quand le produit aqueux n'est pas complètement gelé, les changements de vitesse ou d'orientation du véhicule provoquent des mouvements de la masse liquide dans le réservoir et donc des chocs de cette masse contre les parois du réservoir engendrant des bruits indésirables, aussi appelés « slosh noise » en langue anglaise.

Pour remédier à ce problème, il existe des dispositifs anti-ballottement, également appelés « baffle anti-slosh » en langue anglaise. Les dispositifs anti-ballottement ont pour but d'adsorber le bruit associé aux vagues générées au sein du réservoir lorsque le véhicule accélère brusquement, freine et prend des virages. Un tel dispositif est décrit dans le document de brevet FR3038000 A1. Dans ce document, le dispositif anti-ballottement comprend une cloison anti-ballottement qui intègre à demeure une piste résistive en acier inoxydable. Cette piste résistive est connectée à un point d'alimentation électrique qui rend le dispositif anti-ballottement chauffant.

Toutefois, le dispositif anti-ballottement chauffant divulgué dans le document de brevet FR3038000 A1 présente l'inconvénient de ne chauffer le produit aqueux qu'autour de la cloison anti-ballottement, ce qui n'est pas suffisant pour dégeler rapidement un produit aqueux, comme par exemple de l'eau ou de l'urée, contenu dans un réservoir de stockage d'un véhicule. En effet, par -15 degrés Celsius, un moteur thermique atteint sa température normale de fonctionnement cinq minutes après le démarrage, aussi, le conducteur d'un véhicule à moteur thermique s'attend-il à disposer de toute la puissance de son véhicule cinq minutes après avoir démarré. Or, tant que les dispositifs de consommation de produit aqueux du véhicule à moteur thermique ne sont pas correctement alimentés, la puissance du véhicule est bridée pour protéger le moteur et limiter les émissions polluantes. Ce scénario se produit quand le contenu d'un réservoir configuré pour délivrer un produit aqueux, comme par exemple de l'eau ou de l'urée, à un dispositif de consommation de ce dernier est encore gelé.

Un but de l'invention est notamment de pallier les inconvénients précités.

Eu égard au problème de gel du produit aqueux, l'invention a pour objet un réservoir de stockage d'un produit aqueux configuré pour délivrer un produit aqueux à un dispositif de consommation de produits aqueux d'un véhicule automobile, ledit véhicule automobile étant du type comprenant au moins un circuit de liquide de refroidissement et au moins une source d'énergie électrique, ledit réservoir de stockage comprenant un dispositif de chauffage bi-énergie configuré pour chauffer un produit aqueux contenu dans le réservoir de stockage , le dispositif de chauffage bi-énergie comprenant une plaque chauffante dudit produit aqueux configurée pour être chauffée sélectivement soit par un premier moyen de chauffage, soit par un deuxième moyen de chauffage distinct et indépendant dudit premier moyen de chauffage, soit à la fois par lesdits premier et deuxième moyens de chauffage, la plaque chauffante comprenant le premier moyen de chauffage et le deuxième moyen de chauffage, ledit premier moyen de chauffage étant un circuit de chauffage hydraulique configuré pour être raccordé de manière étanche à un circuit de liquide de refroidissement du véhicule, et ledit deuxième moyen de chauffage étant un circuit de chauffage électrique configuré pour être branché à une source d'énergie électrique du véhicule.

Grâce à l'invention, on résout les difficultés de positionnement mutuel du circuit de chauffage hydraulique et du circuit de chauffage électrique, et on réduit considérablement l'encombrement et le coût de fabrication du dispositif de chauffage bi-énergie en regroupant tous les circuits de chauffage dans un seul composant: la plaque chauffante. Un autre avantage de la plaque chauffante selon l'invention est qu'elle offre une plus grande surface d'échange de chaleur avec le produit aqueux grâce au fait que la plaque chauffante est une plaque et non un tube. Par l'expression "plaque", on entend désigner un élément dont l'épaisseur est négligeable par rapport aux autres dimensions (longueur, largeur).

Enfin, grâce à l'invention, on a une plus grande liberté pour combiner l'énergie fournie par le circuit de chauffage hydraulique et l'énergie fournie par le circuit de chauffage électrique du véhicule.

Selon des caractéristiques additionnelles de l'invention, prises individuellement ou en combinaison :
- le circuit de chauffage hydraulique et le circuit de chauffage électrique serpentent sur la plaque chauffante. De cette façon, le chauffage de la plaque chauffante est plus rapide et homogène.
- le circuit de chauffage hydraulique et le circuit de chauffage électrique sont entrelacés. De cette façon, le parcours du circuit de chauffage hydraulique est le même que le parcours du circuit de chauffage électrique. Grâce à cette caractéristique, le chauffage de la plaque chauffante est plus rapide et homogène.
- la plaque chauffante est formée par l'assemblage d'une première tôle métallique et d'une deuxième tôle métallique et les premier et deuxième moyens de chauffage sont pris en sandwich entre la première tôle métallique et la deuxième tôle métallique. Ainsi, les premier et deuxième moyens de chauffage sont intégrés dans un seul composant : la plaque chauffante. Ceci est particulièrement avantageux pour réduire l'encombrement du dispositif de chauffage bi-énergie selon le premier objet de l'invention.
- au moins une des première et deuxième tôles métalliques est emboutie pour former un premier conduit et le circuit de chauffage hydraulique comprend le premier conduit. Ceci permet de réaliser un circuit de chauffage hydraulique à moindre coût.
- au moins une des première et deuxième tôles métalliques est emboutie pour former un deuxième conduit configuré pour loger le deuxième moyen de chauffage. Ceci permet de réaliser un conduit pour loger le deuxième moyen de chauffage à moindre coût.
- la plaque chauffante comprend un circuit de transfert hydraulique configuré pour transférer du produit aqueux contenu dans un réservoir de stockage d'un produit aqueux vers un module d'alimentation en produit aqueux d'un dispositif de consommation de produits aqueux d'un véhicule automobile. De cette façon, la plaque chauffante intègre une fonction supplémentaire qui permet d'assurer un bon fonctionnement du réservoir, plus particulièrement, un bon fonctionnement des moyens du réservoir configurés pour délivrer un produit aqueux à un dispositif de consommation de produits aqueux d'un véhicule.
- le circuit de transfert hydraulique comprend un troisième conduit et au moins un point d'aspiration configuré pour aspirer un produit aqueux contenu dans un réservoir de stockage d'un produit aqueux. Ceci permet de réaliser un circuit de transfert hydraulique à moindre coût.
- le circuit de transfert hydraulique comprend un raccord hydraulique configuré pour raccorder le ou les points d'aspiration à une pompe d'aspiration. De cette façon, la plaque chauffante intègre un élément supplémentaire du circuit de transfert hydraulique.
- le premier moyen de chauffage comprend au moins une première zone de chauffage de la plaque chauffante située à proximité d'au moins un premier point d'aspiration et au moins une deuxième zone de chauffage de la plaque chauffante plus distante dudit au moins un premier point d'aspiration que la première zone et de préférence située à proximité d'au moins un deuxième point d'aspiration, le premier moyen de chauffage étant configuré pour que la puissance surfacique de chauffage instantanée du premier moyen de chauffage soit plus importante dans la première zone que dans la deuxième zone.
- le deuxième moyen de chauffage comprend au moins une première zone de chauffage de la plaque chauffante située à proximité d'au moins un premier point d'aspiration et au moins une deuxième zone de chauffage de la plaque chauffante plus distante dudit au moins un premier point d'aspiration que la première zone et de préférence située à proximité d'au moins un deuxième point d'aspiration, le deuxième moyen de chauffage étant configuré pour que la puissance surfacique de chauffage instantanée du deuxième moyen de chauffage soit plus importante dans la première zone que dans la deuxième zone. Ainsi, on peut disposer rapidement de produit aqueux non gelé pour permettre son aspiration, et ce même lorsque la puissance disponible pour le deuxième moyen de chauffage, comme par exemple un circuit de chauffage électrique, est limitée. Au démarrage du véhicule, cette puissance peut être limitée du fait de la puissance instantanée limitée pouvant être fournie par une batterie, et peut être en outre limitée par l'utilisation d'autres dispositifs électriques, par exemple destinés au confort des occupants du véhicule, comme des sièges chauffants ou le chauffage de l'habitacle, lesquels peuvent consommer de la puissance électrique prioritairement par rapport à la fonction de dégel du produit aqueux contenu dans le réservoir.

Selon d'autres caractéristiques additionnelles de l'invention, prises individuellement ou en combinaison :
- le premier moyen de chauffage est un circuit de chauffage raccordé à un circuit de récupération de chaleur fatale du véhicule. Par l'expression "chaleur fatale", on entend désigner la chaleur résiduelle non utilisée du véhicule. Ceci permet de chauffer la plaque chauffante avec, par exemple, la chaleur fatale du moteur et/ou la chaleur fatale du freinage et/ou la chaleur fatale des gaz d'échappement.
- le premier conduit est séparé du deuxième conduit. Ceci permet d'éviter que les premier et deuxième moyens de chauffage se chauffent mutuellement.
- la plaque chauffante est en métal, par exemple, en acier, en acier inoxydable ou en aluminium. Ceci permet d'avoir un meilleur échange de chaleur entre la plaque chauffante et le produit aqueux.
- la plaque chauffante est revêtue d'un biocide, par exemple un métal ayant des propriétés antimicrobiennes tel que le zinc, l'argent, le cuivre ou le nickel. Ceci permet d'éviter la bio contamination du produit aqueux contenu dans le réservoir de stockage.
- la plaque chauffante est revêtue d'un revêtement anticorrosif tel qu'un revêtement à base de zinc. Ceci permet de protéger la plaque chauffante de la corrosion.
- le premier conduit est étanche au produit aqueux contenu dans le réservoir. Ceci permet d'éviter que du liquide de refroidissement se mélange à du produit aqueux et réciproquement.
- la première tôle métallique est assemblée à étanchéité à la deuxième tôle métallique de part et d'autre du premier conduit, le long de ce dernier. Ainsi, on évite que du liquide de refroidissement fuit en dehors de la plaque chauffante.
- l'assemblage à étanchéité de la première tôle métallique à la deuxième tôle métallique est réalisé par soudage laser par transparence ou par brasage ou par soudage TIG de la première tôle métallique sur la deuxième tôle métallique. De cette façon, on obtient un assemblage étanche à l'endroit voulu.
- l'assemblage à étanchéité de la première tôle métallique à la deuxième tôle métallique est réalisé par collage ou encollage ou contre-collage de la première tôle métallique sur la deuxième tôle métallique. De cette façon, on améliore l'étanchéité de l'assemblage étanche.
- au moins une des deux tôles métalliques est emboutie pour former le troisième conduit pour le circuit de transfert hydraulique. Ceci permet de réaliser un circuit de transfert hydraulique à moindre coût.
- la plaque chauffante est formée par l'assemblage de trois tôles métalliques : une première, une deuxième et une troisième tôle. Le premier moyen de chauffage est pris en sandwich entre la première et la deuxième tôle tandis que le deuxième moyen de chauffage est pris en sandwich entre la deuxième et la troisième tôle.

Selon une caractéristique additionnelle de l'invention, le réservoir de stockage comprend un dispositif de décontamination par rayonnement ultra-violet configuré pour décontaminer le produit aqueux contenu dans le réservoir de stockage en irradiant le produit aqueux avec des rayonnements ultra-violet. Ceci permet d'éviter la bio contamination du produit aqueux contenu dans le réservoir de stockage.

On va maintenant décrire un exemple, non limitatif, de réalisation et de mise en œuvre de l'invention à l'aide des figures suivantes :
- la figure 1 est une vue en perspective de la face supérieure d'un dispositif de chauffage bi-énergie.
- la figure 2 est une vue en coupe en perspective d'un réservoir de stockage d'un produit aqueux comprenant un dispositif de chauffage bi-énergie.
- la figure 3 est une vue en coupe d'un réservoir de stockage d'un produit aqueux comprenant un dispositif de chauffage bi-énergie.
- la figure 4 est une vue en perspective de la face inférieure d'un dispositif de chauffage bi-énergie.
- la figure 5 est une vue en coupe en perspective d'une partie de la face inférieure d'un dispositif de chauffage bi-énergie.
- la figure 6 est une vue en coupe en perspective d'une partie d'un point d'aspiration.
- la figure 7 est une vue en coupe en perspective d'une partie d'un raccord hydraulique.
- la figure 8 est une vue en perspective de la face supérieure d'un dispositif anti-ballottement chauffant qui n'est pas un mode de réalisation de l'invention mais qui est utile à la compréhension de l'invention.
- la figure 9 est une vue en perspective de la face supérieure d'un dispositif anti-ballottement chauffant qui n'est pas un mode de réalisation de l'invention mais qui est utile à la compréhension de l'invention.
- la figure 10 est une vue en coupe d'un réservoir de stockage d'un produit aqueux comprenant un dispositif anti-ballottement chauffant qui n'est pas un mode de réalisation de l'invention mais qui est utile à la compréhension de l'invention.
- la figure 11 est une vue en perspective de la face supérieure d'un dispositif anti-ballottement chauffant qui n'est pas un mode de réalisation de l'invention mais qui est utile à la compréhension de l'invention.
- la figure 12 est une vue en perspective de la face supérieure d'un dispositif anti-ballottement chauffant qui n'est pas un mode de réalisation de l'invention mais qui est utile à la compréhension de l'invention.
- la figure 13 est une vue en coupe en perspective d'un réservoir de stockage d'un produit aqueux montrant un dispositif anti-ballottement chauffant qui n'est pas un mode de réalisation de l'invention mais qui est utile à la compréhension de l'invention.
- La figure 14 est une vue en perspective éclatée d'un dispositif anti-ballottement chauffant.

Sur toutes les figures, les éléments identiques portent les mêmes numéros de référence.

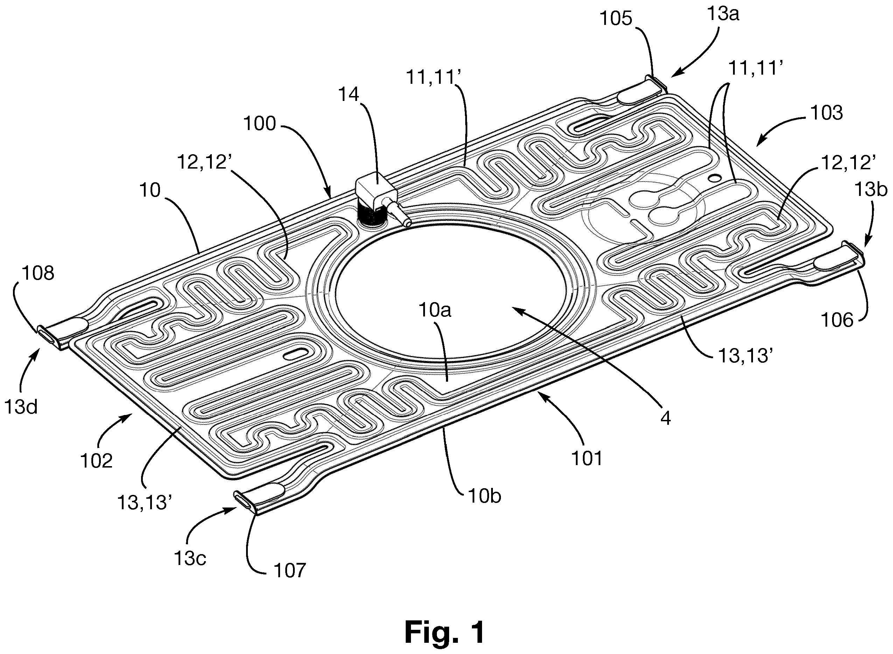

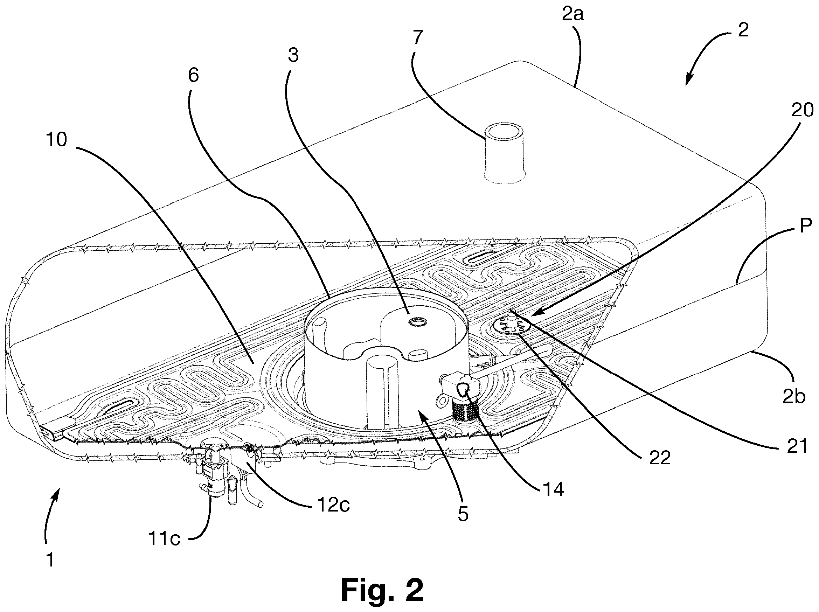

Un dispositif de chauffage bi-énergie 1 tel qu'illustré sur la figure 1 comprend une plaque chauffante 10 ayant la forme générale d'un rectangle avec deux grands cotés 100, 101, deux petits cotés 102, 103, quatre angles 105, 106, 107, 108 reliant les quatre côtés, une face supérieure 10a et une face inférieure 10b telle que la distance entre la face supérieure 10a et la face inférieure 10b est comprise entre 5 mm et 15 mm, cette distance est l'épaisseur de la plaque chauffante 10. Par les expressions "face supérieure" et "face inférieure", on entend désigner la face tournée vers le haut, respectivement, vers le bas du réservoir de stockage d'un produit aqueux quand le dispositif de chauffage bi-énergie est installé dans le fond dudit réservoir (voir figure 2). Dans l'exemple illustré, la plaque chauffante 10 présente en son milieu une ouverture circulaire 4 pour laisser passer un module 5 d'alimentation en produit aqueux (voir figure 2). De plus, les angles 105, 106, 107, 108 de la plaque chauffante 10 sont agencés de façon à atteindre les angles du fond du réservoir 2, dans l'exemple illustré, les angles 105, 106, 107, 108 de la plaque chauffante 10 sont en appui sur le fond du réservoir 2, dans les quatre angles du fond du réservoir 2. De préférence, la plaque chauffante 10 est en métal. En effet, quand la plaque chauffante 10 est installée dans un réservoir de stockage d'urée, il est préférable que la plaque chauffante soit en acier inoxydable pour mieux résister à la corrosion, tandis que quand la plaque chauffante 10 est installée dans un réservoir de stockage d'eau, la plaque chauffante peut avantageusement être en aluminium car l'aluminium conduit mieux la chaleur que l'acier.

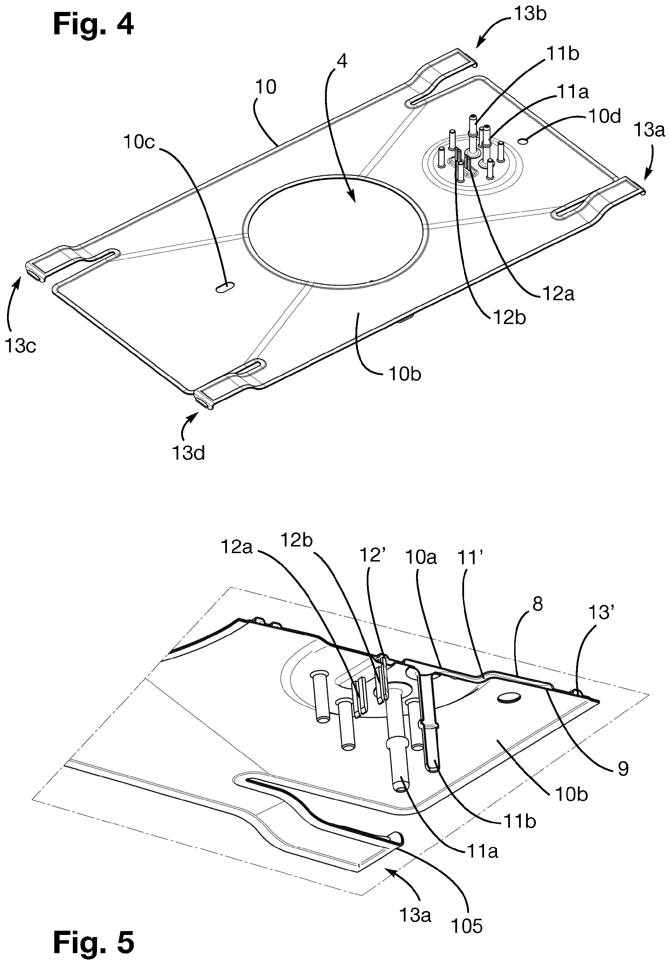

Selon une caractéristique de l'invention, la plaque chauffante 10 est chauffée sélectivement, soit par un premier moyen de chauffage 11, soit par un deuxième moyen de chauffage 12 distinct et indépendant du premier moyen de chauffage 11, soit à la fois par les premier 11 et deuxième 12 moyens de chauffage, ceci permet une grande variété de modes opératoires de chauffage. Selon un mode de réalisation particulier de l'invention, le premier moyen de chauffage 11 est un circuit de chauffage hydraulique 11 et le deuxième moyen de chauffage 12 est un circuit de chauffage électrique 12. Dans un mode préféré de réalisation de l'invention, le circuit de chauffage hydraulique 11 est un conduit 11' qui serpente sur la plaque chauffante 10. Dans un mode particulier de réalisation, le conduit 11' fait saillie dans l'épaisseur de la plaque chauffante 10, à partir de la face supérieure 10a. En fonctionnement, le conduit 11' est parcouru par un liquide caloporteur tel que du liquide de refroidissement moteur, d'une entrée 11a de liquide vers une sortie 11b de liquide (voir figure 4). Le glycol est un exemple de liquide caloporteur utilisé comme liquide de refroidissement moteur. Avantageusement, le circuit de chauffage électrique 12 est un tube de chauffage électrique, aussi appelé chauffeur tubulaire électrique ou encore résistance chauffante, par exemple de 500 W (non représenté) qui serpente sur la plaque chauffante 10. Dans un mode préféré de réalisation de l'invention, le tube de chauffage électrique est logé dans un conduit 12' de la plaque chauffante 10. Dans un mode particulier de réalisation, le conduit 12' fait saillie dans l'épaisseur de la plaque chauffante 10, à partir de la face supérieure 10a. En fonctionnement, une source d'énergie électrique comme par exemple une batterie électrique, alimente le tube de chauffage électrique via des fiches électriques 12a, 12b (voir figure 4).

C'est une unité (non représentée) de contrôle électronique ECU ("Electronic Control Unit" en langue anglaise) du véhicule qui commande, en fonction des conditions de température extérieure/intérieure du véhicule, du régime moteur, du comportement du conducteur, de l'inclinaison du véhicule et d'autres paramètres, le chauffage sélectif de la plaque chauffante 10. Ainsi, dans certains cas, la plaque chauffante 10 ne sera chauffée que par le circuit de chauffage hydraulique 11, dans d'autres cas, la plaque chauffante 10 ne sera chauffée que par le circuit de chauffage électrique 12 et dans d'autres cas encore, la plaque chauffante 10 sera chauffée à la fois par le circuit de chauffage hydraulique 11 et par le circuit de chauffage électrique 12.

Les circuits de chauffage hydraulique 11 et électrique 12 font parties intégrantes de la plaque chauffante 10. Par "font parties intégrantes", on veut dire que les circuits de chauffage hydraulique 11 et électrique 12 s'étendent essentiellement dans l'épaisseur de la plaque chauffante 10. La plaque chauffante 10 est une plaque de conduction thermique chauffée par contact avec l'un et/ou l'autre des deux circuits de chauffage hydraulique 11 et électrique 12. Avantageusement, le circuit de chauffage hydraulique 11 et le circuit de chauffage électrique 12 sont entrelacés. Par "sont entrelacés", on veut dire que les circuits de chauffage hydraulique 11 et électrique 12 serpentent ensemble sur la plaque chauffante 10 en restant parallèle l'un à l'autre.

En pratique, par temps froid, quand la plaque chauffante 10 doit dégeler un produit aqueux comme par exemple de l'eau ou de l'urée contenu dans un réservoir de stockage d'un véhicule à moteur thermique, le circuit de chauffage hydraulique 11 est alimenté par du liquide de refroidissement provenant du circuit de refroidissement du moteur thermique (non représenté). En effet, après le démarrage du moteur, le liquide de refroidissement commence à chauffer dans le circuit de refroidissement du moteur, du liquide de refroidissement ainsi chauffé est envoyé dans le circuit de chauffage hydraulique 11. Dès que du liquide de refroidissement chaud parcourt le conduit 11', il échange de la chaleur avec la plaque chauffante 10. Cet échange de chaleur a pour effet de chauffer la plaque chauffante 10 par conduction thermique. Dès que la plaque chauffante 10 est assez chaude, le produit aqueux en contact avec la plaque chauffante 10 commence à dégeler et à se liquéfier.

Le mode opératoire décrit dans le paragraphe précédent s'applique pareillement dans le cas d'un véhicule électrique du type à pile à combustible. La différence est que le circuit de chauffage hydraulique 11 est alimenté par du liquide de refroidissement provenant d'un circuit de refroidissement de la pile à combustible (non représenté).

On comprend bien que plus la plaque chauffante 10 est chaude, c'est-à-dire plus sa température est élevée, plus vite le produit aqueux gelé se liquéfie, d'où l'intérêt d'avoir un deuxième moyen de chauffage 12 de la plaque chauffante 10, distinct et indépendant du premier moyen de chauffage 11. En pratique, quand la plaque chauffante 10 doit dégeler un produit aqueux comme par exemple de l'eau ou de l'urée contenu dans un réservoir de stockage d'un véhicule à moteur thermique ou à pile à combustible, le circuit de chauffage électrique 12 est alimenté par une source d'énergie électrique du véhicule (non représenté). Dès que le tube de chauffage électrique commence à chauffer, il échange de la chaleur avec la plaque chauffante 10. Cet échange de chaleur a pour effet de chauffer la plaque chauffante 10 par conduction thermique. Ainsi, en combinant deux moyens de chauffage différents 11 et 12 de la plaque chauffante 10, on obtient une plaque chauffante 10 plus efficace à dégeler un produit aqueux gelé. Un paramètre connu pour quantifier l'échange de chaleur entre deux surfaces est le coefficient de transmission thermique exprimé en watt par mètre carré-kelvin (W·m⁻²·K⁻¹).

A la figure 1, on trouve également illustré un troisième circuit 13 qui, à l'instar des premier 11 et deuxième 12 circuits de chauffage, fait partie intégrante de la plaque chauffante 10 mais qui, à la différence des circuits précités, n'est pas un circuit de chauffage. En effet, le circuit 13 est un circuit de transfert hydraulique, son rôle est de transférer du produit aqueux contenu dans le réservoir de stockage 2 vers le module 5 d'alimentation en produit aqueux (voir figure 2). Plus précisément, le rôle du circuit de transfert hydraulique 13 est d'assurer que, quelle que soit la position de roulage du véhicule automobile, le module 5 a toujours accès à du produit aqueux contenu dans le réservoir de stockage 2. Le module 5, quant à lui, sert à délivrer du produit aqueux au dispositif de consommation de produits aqueux du véhicule. Quand, par exemple, le véhicule automobile prend un virage serré et que le réservoir de stockage 2 est presque vide, le peu de produit aqueux disponible va s'accumuler d'un côté ou de l'autre du réservoir 2. Si, dans le même temps, le dispositif de consommation de produits aqueux du véhicule réclame du produit aqueux, il est possible qu'il n'en reçoive pas pour la raison que la pompe d'aspiration 3 du module d'alimentation 5 ne peut pas accéder au produit aqueux accumulé d'un côté ou de l'autre du réservoir 2. Le circuit de transfert hydraulique 13 est là pour éviter cette situation. En pratique, le circuit de transfert hydraulique 13 comprend un conduit 13' reliant entre eux quatre points d'aspiration 13a, 13b, 13c, 13d, chaque point 13a, 13b, 13c, 13d étant placé dans un angle 105, 106, 107 et 108 respectivement, de la plaque chauffante 10. Le circuit de transfert hydraulique 13 comprend en outre un raccord hydraulique 14, ce raccord 14 sert à raccorder les points d'aspiration 13a, 13b, 13c, 13d à la pompe d'aspiration 3 via le conduit 13' (voir figure 2). Ainsi, lorsque le produit aqueux s'accumule d'un côté ou de l'autre du réservoir 2, il y a toujours au moins un point d'aspiration 13a, 13b, 13c, 13d immergé dans le produit aqueux du fait de l'agencement particulier des angles 105, 106, 107 et 108 dans le réservoir de stockage 2. Par cette disposition, la pompe d'aspiration 3 du module 5 trouve toujours du produit aqueux à pomper dans le réservoir de stockage 2, ceci quelle que soit la position de roulage du véhicule automobile.

Avantageusement, à l'instar des conduits 11' et 12', le conduit 13' fait saillie dans l'épaisseur de la plaque chauffante 10, à partir de la face supérieure 10a.

La figure 2 illustre une plaque chauffante 10 installée dans le fond d'un réservoir de stockage 2 d'un produit aqueux (non représenté). Dans l'exemple illustré, le réservoir 2 est fabriqué à partir de deux demi-coquilles obtenues par moulage d'un matériau plastique: une demi-coquille supérieure 2a et une demi-coquille inférieure 2b. Les deux demi-coquilles 2a, 2b sont thermo-soudées l'une à l'autre le long d'un plan de joint P pour former un réservoir de stockage fermé. La plaque chauffante 10 est introduite et fixées dans le fond du réservoir avant sa fermeture par thermo-soudage. La fixation de la plaque chauffante 10 est assurée par des fixations 20 (une seule fixation est visible sur la figure 2). Dans l'exemple illustré, la fixation 20 est obtenue par le passage d'une tige 21 à travers une ouverture ménagée dans l'épaisseur de la plaque chauffante 10, la tige 21 est une tige en plastique issue du moulage de la demi-coquille de fond du réservoir 2 et fait saillie vers l'intérieur du réservoir 2. Une rondelle à pousser 22 montée sur l'extrémité libre de la tige 21 sert de butée d'arrêt de la plaque chauffante 10. Un module 5 d'alimentation en produit aqueux est également représenté. Dans le cas où le réservoir 2 est un réservoir d'eau, le module 5 est aussi appelé WDM pour « Water Delivery Module » en langue anglaise. Un WDM est un ensemble de composants agencés pour fournir de l'eau sous pression à un moteur à injection. Parmi les composants du module WDM, on trouve une pompe à eau comme la pompe d'aspiration 3 et un conduit d'injection (non représenté) pour injecter de l'eau sous pression dans le moteur du véhicule. On peut aussi trouver un capteur de température (non représenté), pour mesurer la température de l'eau et un capteur de qualité (non représenté) pour mesurer une ou plusieurs propriétés physico-chimiques de l'eau. Avantageusement, un module WDM comprend également un pot stabilisateur 6, aussi appelé « swirl pot » en langue anglaise, destiné à stocker en permanence un volume d'eau utile au bon fonctionnement de la pompe à eau.

Une tubulure de remplissage 7 est prévue dans la demi-coquille supérieure 2a pour remplir le réservoir 2 avec un produit aqueux. Le liquide de refroidissement tel que du glycol (non représenté) est amené dans le circuit de chauffage hydraulique 11 via un connecteur hydraulique 11c du type raccord rapide. Le branchement électrique du circuit de chauffage électrique 12 à une source d'énergie électrique du véhicule telle qu'une batterie électrique se fait par l'intermédiaire d'un connecteur électrique 12c enfiché sur les fiches électriques 12a, 12b.

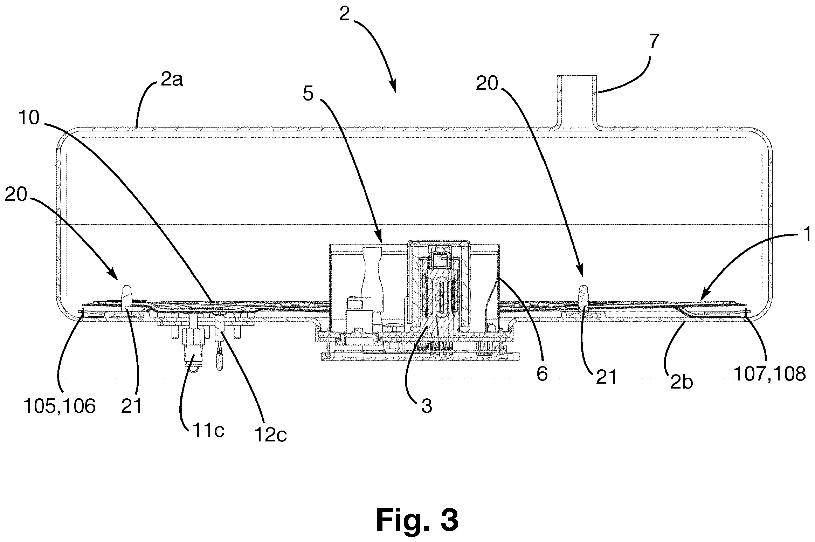

La figure 3 illustre un réservoir de stockage 2 d'un produit aqueux comprenant un dispositif de chauffage bi-énergie 10. Avantageusement, les angles 105, 106, 107, 108 de la plaque chauffante 10 sont agencés de façon à atteindre les angles du fond du réservoir 2. De plus, les angles 105, 106, 107, 108 de la plaque chauffante 10 sont en appui sur le fond du réservoir 2, ceci permet aux points d'aspiration 13a, 13b, 13c, 13d d'être placés au fond du réservoir afin de toujours avoir accès au produit aqueux même quand il se trouve en petite quantité. Pour améliorer l'échange thermique entre la plaque chauffante 10 et le produit aqueux contenu dans le réservoir 2, le produit aqueux est aussi présent sous la plaque chauffante 10, c'est-à-dire entre la face inférieure 10b et le fond du réservoir 2, ceci permet d'augmenter l'échange de chaleur entre la plaque chauffante 10 et le produit aqueux. La distance entre la face inférieure 10b et le fond du réservoir est de 10 à 20 mm.

La figure 4 illustre la plaque chauffante 10 vue côté face inférieure 10b. Sur cette vue, les circuits de chauffage hydraulique 11 et électrique 12 ainsi que le circuit de transfert hydraulique 13 ne sont pas visibles. En effet, les conduits 11', 12' et 13' ne font pas saillie à partir de la face inférieure 10b. Ce qui fait saillie à partir de la face inférieure 10b ce sont des tubes métalliques 11a, 11b et des fiches électriques 12a, 12b.

Le connecteur hydraulique 11c est connecté aux tubes métalliques 11a, 11b (voir figure 2) pour raccorder le circuit de chauffage hydraulique 11 au circuit de refroidissement du véhicule automobile. De préférence, les tubes métalliques 11a, 11b sont soudés sur la face inférieure 10b de la plaque chauffante 10, l'un à l'entrée et l'autre à la sortie du circuit de chauffage hydraulique 11. Les fiches électriques 12a, 12b sont plantées à leur base dans un matériau isolant qui sert aussi de support aux fiches 12a, 12b dans la plaque chauffante 10. Des ouvertures 10c, 10d sont ménagées dans l'épaisseur de la plaque chauffante 10 pour les fixations 20 (voir figure 2).

La figure 5 illustre une plaque chauffante 10 formée à partir de deux tôles métalliques 8, 9. De préférence, la tôle 8, 9 est une tôle d'acier inoxydable de 0,5 à 0,6 mm d'épaisseur. La première tôle métallique 8 contient la face supérieure 10a de la plaque chauffante 10 et la deuxième tôle métallique 9 contient la face inférieure 10b de la plaque chauffante 10. Avantageusement, le circuit de chauffage hydraulique 11 et le circuit de chauffage électrique 12 sont pris en sandwich entre la première tôle métallique 8 et la deuxième tôle métallique 9. Dans un mode de réalisation préféré, la première tôle métallique 8 est emboutie pour former un premier conduit 11'. Le circuit de chauffage hydraulique 11 comprend le premier conduit 11'. Avantageusement, la première tôle métallique 8 est aussi emboutie pour former un deuxième conduit 12'. Le circuit de chauffage électrique 12 est logé dans le deuxième conduit 12'. Grâce à cette disposition, on réduit le coût de fabrication des deux circuits 11 et 12. Avantageusement, la première tôle métallique 8 est également emboutie pour former un troisième conduit 13'. Le circuit de transfert hydraulique 13 comprend le troisième conduit 13'. Grâce à cette disposition, on réduit le coût de fabrication des trois circuits 11, 12 et 13. De plus, le circuit de transfert hydraulique 13 est également chauffé par la plaque chauffante 10 ce qui permet, en cas de besoin, de dégeler le produit aqueux contenu dans le circuit de transfert hydraulique 13.

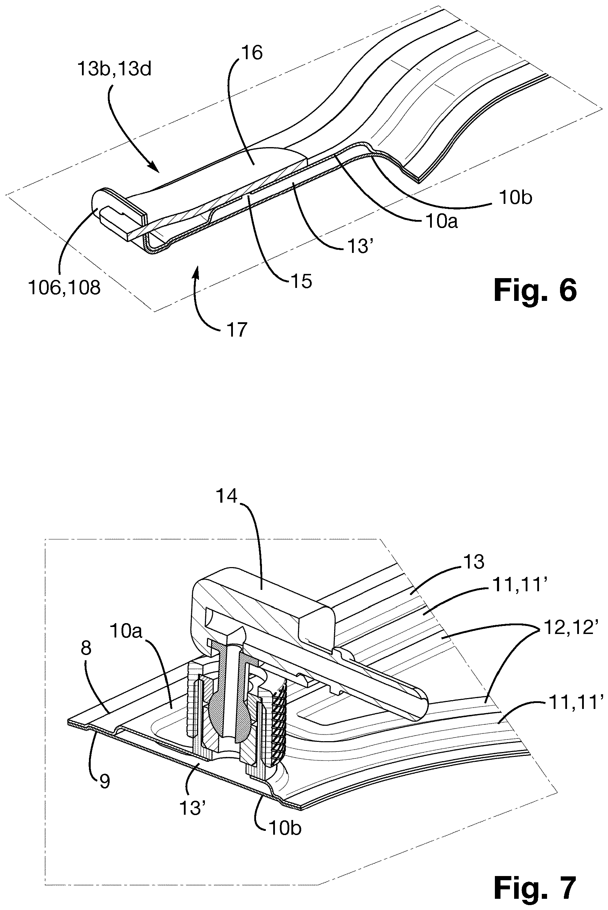

La figure 6 illustre quelques détails d'un point d'aspiration 13a, 13b, 13c, 13d. Parmi ces détails, on trouve un clapet 17 comprenant un orifice d'aspiration 15 et une languette 16. La languette 16 est montée en porte-à-faux au bord de l'angle 106, 108 de la plaque chauffante 10. L'extrémité libre de la languette 16 s'étend au-dessus de l'orifice d'aspiration 15. La languette 16 est constituée d'une mousse de type fluoropolymère dont la densité est inférieure à 1, ainsi, quand le point d'aspiration 13a, 13b, 13c, 13d est immergé dans le produit aqueux du réservoir de stockage 2, la languette 16 flotte dans le produit aqueux. Le flottement de la languette 16 permet de découvrir l'orifice 15, ainsi, quand la pompe d'aspiration 3 est activée, le produit aqueux est pompé à travers l'orifice 15. On dit ici que le clapet 17 est ouvert quand le point d'aspiration est immergé.

Quand le point d'aspiration 13a, 13b, 13c, 13d n'est pas immergé dans le produit aqueux du réservoir de stockage 2 et que la pompe d'aspiration 3 est activée, la languette 16 est aspirée par une légère dépression créée dans le circuit de transfert hydraulique 13, par cette disposition, la languette 16 bouche de façon étanche l'orifice 15. On dit ici que le clapet 17 est fermé quand le point d'aspiration est dans l'air.

La figure 7 illustre quelques détails d'un raccord hydraulique 14. Le raccord hydraulique 14, aussi appelé "pipette", est montée sur rotule pour, d'une part, récupérer les défauts de positionnement angulaire entre la plaque chauffante 10 et le module WDM et, d'autre part, faciliter le montage de la pipette.

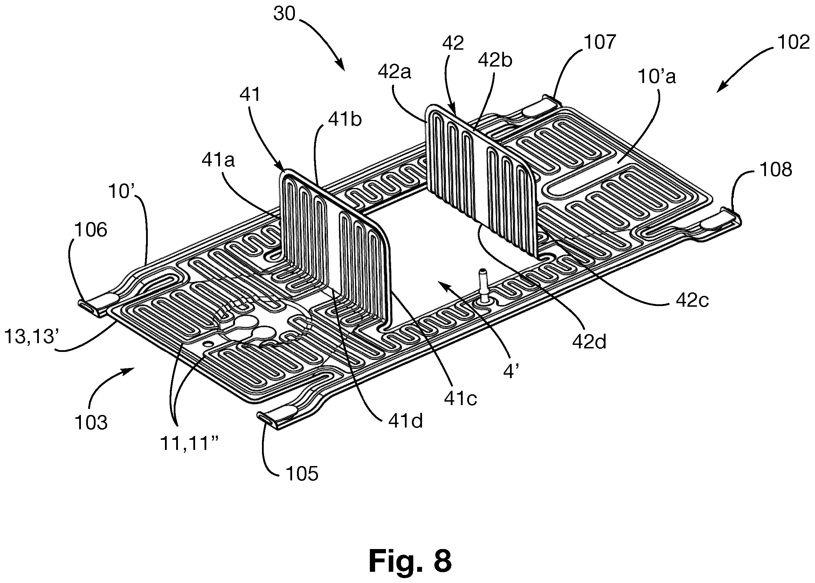

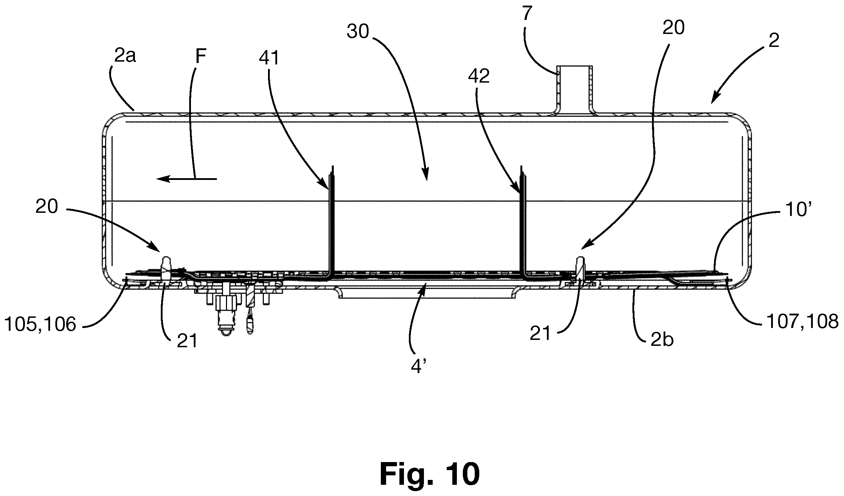

La figure 8 représente un dispositif anti-ballottement chauffant 30 comprenant une plaque chauffante 10' qui ressemble à la plaque chauffante 10 mais où l'ouverture 4' au milieu de la plaque chauffante 10' n'est pas circulaire mais rectangulaire et où le circuit de chauffage électrique est absent. L'ouverture rectangulaire 4' présente deux bords relevés opposés 41, 42 issus de la plaque chauffante 10', c'est-à-dire réalisés monobloc avec la plaque chauffante 10'. En effet, le premier bord relevé 41 est un rectangle découpé dans la plaque chauffante 10' sur trois côtés 41a, 41b, 41c et plié à angle droit sur le quatrième côté 41d tel que le premier bord relevé 41 s'élève au-dessus de la face supérieure 10'a, à la verticale de la plaque chauffante 10', en étant perpendiculaire aux lignes de courant d'écoulement F du produit aqueux dans le réservoir 2 (voir figure 10). De même, le deuxième bord relevé 42 est un rectangle découpé dans la plaque chauffante 10' sur trois côtés 42a, 42b, 42c et plié à angle droit sur le quatrième côté 42d tel que le deuxième bord relevé 42 s'élève au-dessus de la face supérieure 10'a, à la verticale de la plaque chauffante 10', en faisant face au premier bord relevé 41, de l'autre côté de l'ouverture 4'. Grâce à cette disposition, les bords relevés 41, 42 forment des cloisons anti-ballottement.

La plaque chauffante 10' comprend des moyens de chauffage primaire du produit aqueux contenu dans le réservoir 2 (voir figure 10), par exemple un circuit de chauffage hydraulique 11. Le circuit de chauffage hydraulique 11 comprend un conduit 11" qui serpente sur la plaque chauffante 10', d'une part, et sur les bords relevés 41, 42, d'autre part, ainsi, chaque bord relevé 41, 42 est parcouru par le même circuit de chauffage hydraulique 11 que la plaque chauffante 10'. Grâce à cette disposition, les bords relevés 41, 42 forment des cloisons anti-ballottement munies de moyens de chauffage secondaire du produit aqueux contenu dans le réservoir 2.

Par l'expression « moyens de chauffage primaire », on entend désigner des moyens de chauffage agencés pour dégeler plus rapidement un produit aqueux contenu dans le réservoir. Par l'expression « moyens de chauffage secondaire », on entend désigner des moyens de chauffage agencés pour assister les moyens de chauffage primaire.

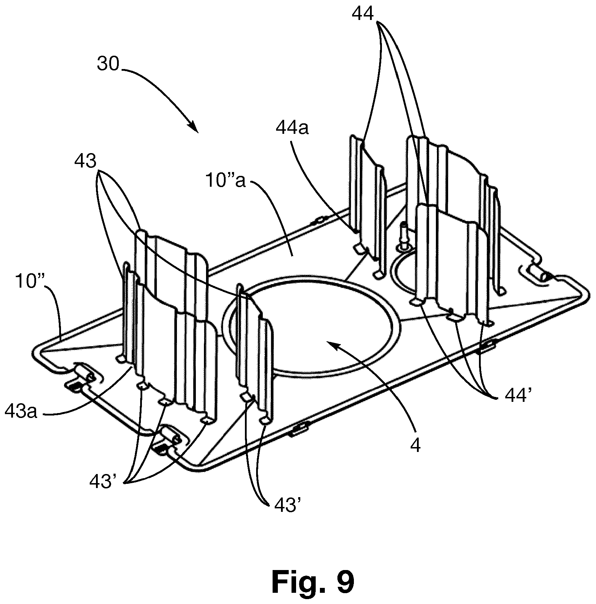

La figure 9 illustre une variante de réalisation d'un dispositif anti-ballottement chauffant 30. Dans ce mode de réalisation, une première 43, respectivement une deuxième 44, cloison anti-ballottement comprend trois rectangles de tôle métallique. Les cloisons anti-ballottement 43, 44 sont opposées l'une à l'autre en ce qu'elles sont séparées l'une de l'autre par l'ouverture 4. Chaque rectangle de tôle de la première cloison anti-ballottement 43, respectivement de la deuxième cloison anti-ballottement 44, est muni de pattes de soudage 43', respectivement 44', sur un côté 43a, respectivement 44a, d'un rectangle. Les pattes de soudage 43', respectivement 44', sont pliées de part et d'autre de la surface de chaque rectangle avec un angle de pliage alternant entre 90° et -90°. Les pattes de soudage 43', respectivement 44', sont soudées sur la face supérieure 10"a de la plaque chauffante 10" afin de solidariser les cloisons anti-ballottement 43, 44 à la plaque chauffante 10". De préférence, la face supérieure 10"a de la plaque chauffante 10" et les rectangles de tôle métallique des cloisons anti-ballottement 43, 44 sont des pièces en acier inoxydable. Dans cette variante de réalisation, la plaque chauffante 10" comprend des moyens de chauffage primaire, par exemple un circuit de chauffage hydraulique ou électrique qui ne s'étend pas sur les cloisons anti-ballottement 43, 44. Ici, les moyens de chauffage secondaire des cloisons anti-ballottement 43, 44 sont réalisés par les rectangles de tôle métallique qui, en étant soudées à la plaque chauffante 10", reçoivent par conduction thermique la chaleur provenant de la plaque chauffante 10" et la transfert au produit aqueux. Grâce à cette disposition, les cloisons anti-ballottement 43, 44 agissent comme des ailettes de radiateur où le radiateur est la plaque chauffante 10".

Alternativement au soudage, les pattes 43', 44' peuvent être rivetées ou vissées à la plaque chauffante 10".

La figure 10 montre le dispositif anti-ballottement chauffant 30 de la figure 8 installé dans le fond d'un réservoir de stockage 2 d'un produit aqueux. La flèche F illustre les lignes de courant d'écoulement du produit aqueux.

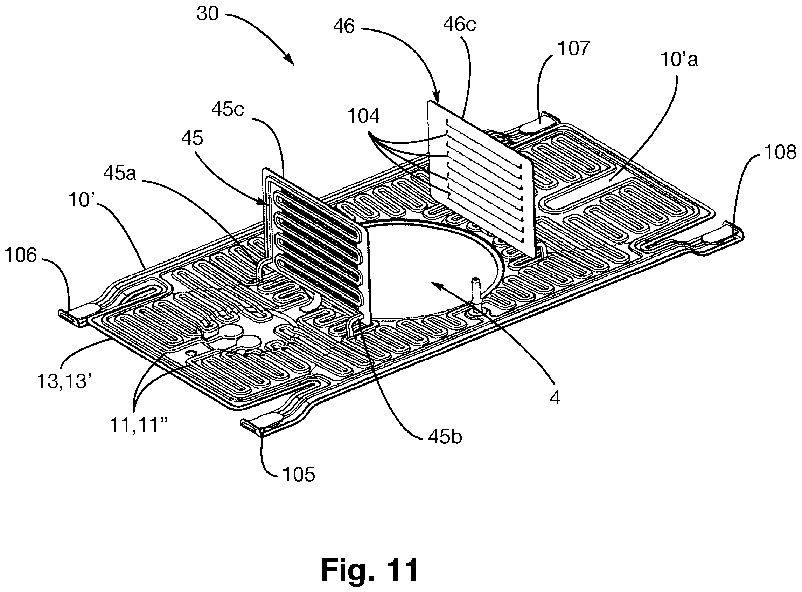

La figure 11 illustre une variante de réalisation d'un dispositif anti-ballottement chauffant 30. Dans ce mode de réalisation, une première cloison anti-ballottement 45 est réalisée à partir d'un tube qui serpente dans un plan perpendiculaire à la face supérieure 10'a de la plaque chauffante 10'. Le tube 45 présente une entrée 45a et une sortie 45b pour un fluide caloporteur. Dans l'exemple illustré, l'entrée 45a est assemblée à étanchéité en amont d'un conduit 11" du circuit de chauffage hydraulique 11 et la sortie 45b est assemblée à étanchéité en aval du conduit 11". Ainsi, quand du liquide de refroidissement chaud circule dans le conduit 11", une partie de ce liquide est déviée dans le tube 45 formant ainsi une cloison anti-ballottement munie de moyens de chauffage secondaire. Par l'expression « liquide de refroidissement chaud », on veut dire que le liquide de refroidissement est plus chaud que le produit aqueux contenu dans le réservoir.

Avantageusement, une deuxième cloison anti-ballottement 46, identique à la première cloison anti-ballottement 45, est montée à l'opposé de cette dernière, c'est-à-dire de l'autre côté de l'ouverture 4. Les cloisons anti-ballottement 45, 46 sont disposées perpendiculairement aux lignes de courant d'écoulement F du produit aqueux dans le réservoir 2 (voir figure 10). Encore plus avantageusement, une plaque métallique 45c, respectivement 46c, est soudée sur le tube 45, respectivement 46. La plaque 45c, 46c est emboutie pour former des lamelles 104 dont la forme est semblable aux persiennes des volets. Grâce à cette disposition, on accroit la turbulence du liquide qui circule à travers les cloisons anti-ballottement 45, 46.

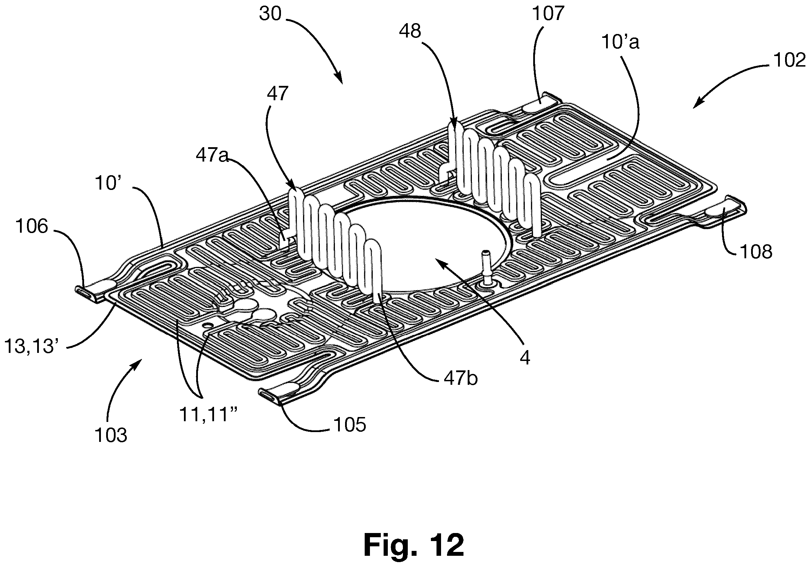

La figure 12 illustre une variante de réalisation d'un dispositif anti-ballottement chauffant 30. Dans ce mode de réalisation, une première cloison anti-ballottement 47 est réalisée à partir d'une résistance de chauffage électrique qui serpente dans un plan perpendiculaire à la face supérieure 10'a de la plaque chauffante 10'. La résistance de chauffage électrique 47 est alimentée en courant électrique par deux bornes électriques 47a, 47b. Dans l'exemple illustré, la résistance 47 est montée en dérivation sur un circuit de chauffage électrique 12" (non représenté) qui serpente sur la plaque chauffante 10'. Grâce à cette disposition, la cloison anti-ballottement 47 est munie de moyens de chauffage secondaire. Avantageusement, une deuxième cloison anti-ballottement 48, identique à la première cloison anti-ballottement 47, est montée à l'opposé de cette dernière, c'est-à-dire de l'autre côté de l'ouverture 4. Les cloisons anti-ballottement 47, 48 sont disposées perpendiculairement aux lignes de courant d'écoulement F du produit aqueux dans le réservoir 2 (voir figure 10).

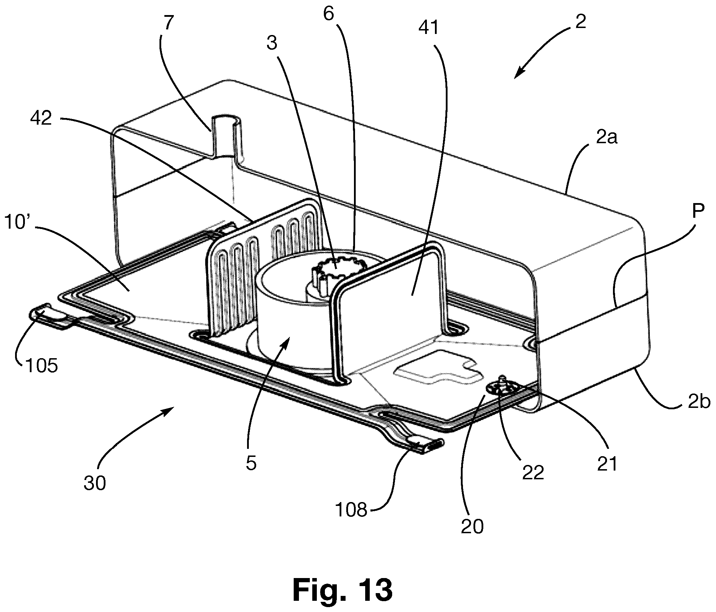

La figure 13 illustre une plaque chauffante 10' installée dans le fond d'un réservoir de stockage 2 d'un produit aqueux. Un module 5 d'alimentation en produit aqueux est également représenté. Dans ce mode de réalisation, des cloisons anti-ballottements chauffantes 50, 51 se font face de part et d'autre du module 5. Grâce à cette disposition, le module 5 et le produit aqueux qu'il contient sont chauffés par les moyens de chauffage secondaire, ceci est particulièrement avantageux car cela permet de dégeler plus rapidement le module 5 que s'il était dégelé par les seuls moyens de chauffage primaire. On voit bien dans cet exemple comment les moyens de chauffage secondaire assistent les moyens de chauffage primaire.

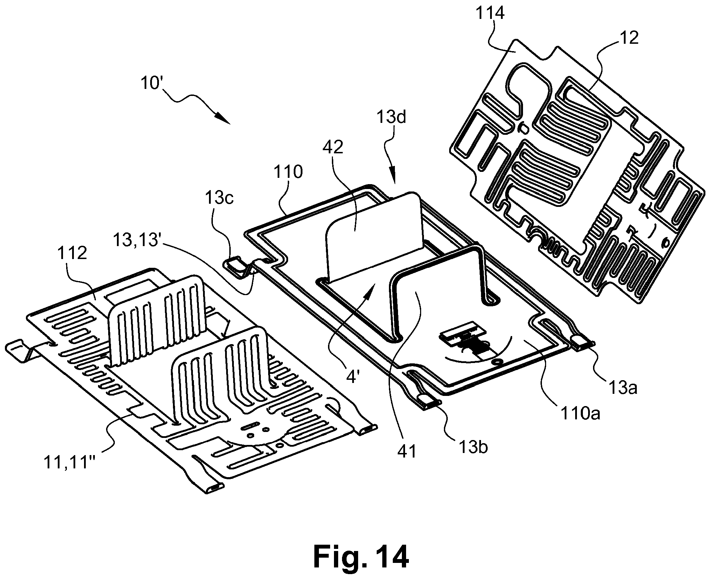

La figure 14 illustre une variante de réalisation d'un dispositif anti-ballottement chauffant 30. Dans ce mode de réalisation, le dispositif anti-ballottement chauffant 30 comporte une plaque chauffante 10' et deux bords relevés opposés 41, 42 issus de la plaque chauffante 10'. Dans cette variante de réalisation, la plaque chauffante 10' et les deux bords relevés 41, 42 sont formés par assemblage d'une tôle métallique de base 110, d'une tôle métallique primaire 112 et d'une tôle métallique secondaire 114. Dans cet exemple, la tôle métallique primaire 112 est assemblée sur la face inférieure de la tôle métallique de base 110, et la tôle métallique secondaire 114 est assemblée sur la face supérieure 110a de la tôle métallique de base 110.

La plaque chauffante 10' comprend un premier moyen de chauffage 11 comprenant des moyens de chauffage primaire du produit aqueux contenu dans le réservoir 2, comme illustré sur la figure 13, par exemple un circuit de chauffage hydraulique 11. Par exemple, le circuit de chauffage hydraulique 11 est raccordé de manière étanche à un circuit de liquide de refroidissement du véhicule. Le circuit de chauffage hydraulique 11 comprend un conduit 11" qui serpente sur la plaque chauffante 10', d'une part, et sur les bords relevés 41, 42, d'autre part. Ainsi, chaque bord relevé 41, 42 est parcouru par le même circuit de chauffage hydraulique 11 que la plaque chauffante 10'. Grâce à cette disposition, les bords relevés 41, 42 forment des cloisons anti-ballottement 50, 51 munies de moyens de chauffage secondaire du produit aqueux contenu dans le réservoir 2, les moyens de chauffage secondaire étant également formés par le premier moyen de chauffage 11. Dans cet exemple, le conduit 11" est disposé sur la face inférieure de la plaque chauffante 10'. Par exemple, le conduit 11" fait saillie dans l'épaisseur de la plaque chauffante 10', formé en sandwich entre la tôle métallique de base 110 et la tôle métallique primaire 112.

La plaque chauffante 10' comprend en outre un deuxième moyen de chauffage 12 distinct et indépendant du premier moyen de chauffage 11. Le deuxième moyen de chauffage 12 comprend des moyens de chauffage primaire du produit aqueux contenu dans le réservoir 2, par exemple un circuit de chauffage électrique 12. Par exemple, le circuit de chauffage 12 est branché à une source d'énergie électrique du véhicule. Dans cet exemple, le circuit de chauffage électrique 12 se trouve sur la face supérieure de la plaque chauffante 10'. Par exemple, il fait saillie dans l'épaisseur de la plaque chauffante 10' et est pris en sandwich entre la tôle métallique de base 110 et la tôle métallique secondaire 114. Dans l'exemple illustré, le circuit de chauffage électrique 12 comprend une piste résistive, ce qui permet d'obtenir un circuit de chauffage électrique de conception particulièrement simple. Le circuit de chauffage électrique 12 peut par exemple comprendre au moins une piste résistive, par exemple plusieurs pistes résistives.

Par exemple, lorsque le circuit de chauffage électrique 12 se compose d'une piste résistive, la surface de la piste résistive est plus importante dans une première zone que dans une deuxième zone, afin d'augmenter la puissance surfacique de chauffage électrique instantanée dans cette première zone. Ainsi, lors du démarrage du véhicule, par exemple lorsque le véhicule se trouve toujours à l'arrêt et ne roule pas encore, en cas de gel du produit aqueux contenu dans le réservoir 2, le produit aqueux gelé peut être chauffé plus rapidement et ainsi liquéfié à proximité de la première zone que dans le reste du réservoir 2, ce qui mène à un dégel plus rapide du produit aqueux dans cette première zone. L'augmentation de la surface est par exemple obtenue en augmentant le nombre de méandres de la piste résistive dans la première zone, la largeur de la piste résistive restant sensiblement identique. La piste résistive est ainsi plus longue dans la première zone que dans la deuxième zone. Dans un autre exemple, lorsque le circuit de chauffage électrique comprend plusieurs pistes résistives, le nombre de pistes résistives peut être plus important dans une première zone que dans une deuxième zone, afin d'augmenter la puissance surfacique de chauffage électrique instantanée dans cette première zone. Dans ce cas, il est également possible que la surface d'une ou plusieurs pistes résistives dans la première zone soit plus importante que la surface de cette ou desdites pistes résistives dans la deuxième zone afin d'augmenter davantage la puissance électrique instantanée dans la première zone.

De manière similaire, dans le circuit de chauffage hydraulique 11, la puissance surfacique de chauffage hydraulique instantanée est plus importante dans une première zone que dans une deuxième zone, afin de dégeler le produit aqueux plus rapidement dans la première zone que dans la deuxième zone. Dans cet exemple, l'augmentation de la puissance surfacique de chauffage hydraulique instantanée est obtenue en augmentant le nombre de méandres du circuit de chauffage hydraulique, par exemple du conduit 11".

La plaque chauffante 10' comprend dans l'exemple illustré sur la figure 14 un troisième circuit, lequel est un circuit de transfert hydraulique 13, similaire à celui déjà décrit précédemment. Ainsi, le circuit de transfert hydraulique 13 comprend un conduit 13' reliant entre eux quatre points d'aspiration 13a, 13b, 13c, 13d, chaque point d'aspiration 13a, 13b, 13c, 13d étant placé dans un coin respectif de la plaque chauffante 10'. Il est possible que la plaque chauffante 10' comporte une pluralité de points d'aspiration, lesquels sont par exemple disposés à au moins deux hauteurs différentes dans le réservoir 2. Dans l'exemple illustré, les points d'aspiration 13a et 13b sont ainsi sensiblement à la même première hauteur, et les points d'aspiration 13c et 13d sont sensiblement à la même deuxième hauteur, laquelle deuxième hauteur leur permet d'être disposés plus profondément dans le réservoir 2 lorsque la plaque chauffante 10' est disposée dans le fond du réservoir 2 et que le réservoir 2 est disposé horizontalement. La hauteur est définie dans un système de coordonnées cartésiennes ayant un axe horizontal et un axe vertical et où l'axe vertical est donné par la direction de la gravité terrestre. Ainsi, un premier point d'aspiration est plus haut qu'un deuxième point d'aspiration quand la valeur de coordonnée d'axe vertical du premier point d'aspiration est supérieure à la valeur de coordonnée d'axe vertical du deuxième point d'aspiration. Inversement, un premier point d'aspiration est plus bas qu'un deuxième point d'aspiration quand la valeur de coordonnée d'axe vertical du premier point d'aspiration est inférieure à la valeur de coordonnée d'axe vertical du deuxième point d'aspiration.

Par suite, le réservoir 2 peut comporter une cavité complémentaire de réception de produit aqueux. Le fond de cette cavité est plus bas pour le produit aqueux que le reste du réservoir 2. Il est possible qu'au moins un point d'aspiration soit disposé dans la cavité, par exemple deux points d'aspiration 13c, 13d, la puissance surfacique de chauffage électrique instantanée étant plus importante dans la zone d'au moins un de ces points d'aspiration 13d, dite première zone, pour permettre un dégel plus rapide du produit aqueux dans cette première zone, que dans la deuxième zone d'au moins un autre point d'aspiration 13c. Ainsi, du fait de la cavité et de la force de gravité, le produit aqueux non gelé ou dégelé va s'écouler dans la cavité, ce qui permet de faciliter son aspiration par ce point d'aspiration 13d. Le produit aqueux non gelé contenu dans le réservoir 2 peut ainsi être aspiré par au moins le point d'aspiration 13d, alors que le produit aqueux est par exemple encore gelé au niveau d'au moins un autre point d'aspiration 13c.

Dans l'exemple illustré, un point d'aspiration 13a se situe le plus proche d'une troisième zone dans laquelle la puissance surfacique de chauffage électrique instantanée du circuit de chauffage électrique 12 est la plus importante. Du fait de cette puissance surfacique de chauffage électrique plus importante, le chauffage par le circuit de chauffage électrique 12 dans cette troisième zone permet de dégeler très rapidement une petite quantité de produit aqueux, afin de le rendre presque immédiatement disponible par aspiration dans le point d'aspiration 13a lors du démarrage du véhicule et ce même lorsque la puissance surfacique de chauffage électrique disponible pour le circuit de chauffage électrique 12 est limitée.

On note que la hauteur d'un point d'aspiration et la puissance surfacique de chauffage électrique disponible dans la zone de ce point d'aspiration ne sont pas nécessairement liées. En effet, on peut chauffer plus fort un premier point d'aspiration situé plus "haut" ou plus "bas" qu'un deuxième point d'aspiration, indépendamment de la quantité de produit aqueux chauffée à ce premier point d'aspiration.

Dans cet exemple, le conduit 13' est disposé sur la face inférieure de la plaque chauffante 10'. Par exemple, le conduit 13' fait saillie dans l'épaisseur de la plaque chauffante 10' et est formé en sandwich entre la tôle métallique de base 110 et la tôle métallique primaire 112.

Le circuit de transfert hydraulique 13 comprend en outre un raccord hydraulique 14 (non représenté), similaire à celui déjà décrit précédemment.

Bien sûr, une telle variante de réalisation de la plaque chauffante du dispositif anti-ballottement chauffant est applicable directement et sans ambigüité à une plaque chauffante du dispositif de chauffage bi-énergie, en disposant une plaque chauffante dotée des mêmes caractéristiques sauf en ce qu'elle ne comporte pas de cloisons anti-ballottement, formées par les bords relevés 41, 42.

Bien entendu, on pourra apporter de nombreuses modifications.

Par exemple, la géométrie de la plaque chauffante 10 n'est pas nécessairement rectangulaire. En effet, la plaque chauffante illustrée est rectangulaire pour s'adapter à la forme du fond du réservoir de stockage illustrée, toutefois, dans un autre exemple de réalisation, la plaque chauffante 10 est circulaire (non représentée) ou d'une autre forme adaptée à la forme du fond du réservoir de stockage dans lequel la plaque chauffante est installée. De même, la plaque chauffante illustrée est plane mais dans une autre forme de réalisation, la plaque chauffante est non plane pour s'adapter à la forme du fond du réservoir de stockage dans lequel la plaque chauffante est installée, par exemple, la plaque chauffante 10 est en escalier (non représentée).

Bien que dans l'exemple illustré, le circuit de chauffage hydraulique 11 et le circuit de chauffage électrique 12 sont entrelacés, on peut envisager une autre configuration de ces circuits, par exemple, le circuit de chauffage hydraulique 11 serpente sur la plaque chauffante 10 en suivant un parcours différent du parcours suivi par le circuit de chauffage électrique 12 (non représenté).

On peut envisager que la plaque chauffante 10' est constituée par la plaque chauffante 10 en sorte que les moyens de chauffage primaire de la plaque chauffante 10' sont un circuit de chauffage hydraulique 11 combiné à un circuit de chauffage électrique 12 (non représenté). Grâce à cette disposition, les moyens de chauffage secondaire peuvent également être un circuit de chauffage hydraulique 11 combiné à un circuit de chauffage électrique 12 (non représenté).

De plus, si on appelle α l'angle formé entre la cloison anti-ballottement et l'axe perpendiculaire à la face supérieure 10" de la plaque chauffante 10', on a α= 0° quand la cloison anti-ballottement est perpendiculaire à la plaque chauffante 10'. Dans un autre mode de réalisation (non représenté), on peut envisager que l'angle α est compris entre -45° et +45°.

Le réservoir selon l'invention est de préférence en matière plastique (c'est-à-dire que sa paroi est principalement en matière plastique). Le terme "plastique" désigne tout matériau comprenant au moins un polymère de résine synthétique. Tout type de plastique peut convenir. Les plastiques qui appartiennent à la catégorie des thermoplastiques sont particulièrement appropriés. Par l'expression "thermoplastique", on entend tout polymère thermoplastique, notamment les élastomères thermoplastiques ainsi que leurs mélanges. Par l'expression "polymère", on entend à la fois des homopolymères et des copolymères, notamment des copolymères binaires et ternaires.

Bien que les figures illustrent un réservoir d'eau configuré pour délivrer de l'eau à un moteur à injection d'un véhicule thermique, l'invention n'est pas limitée à cette application. En effet, le dispositif de chauffage bi-énergie peut facilement être installé dans un réservoir d'urée, par exemple de l'AdBlue (marque déposée), configuré pour délivrer de l'urée à un catalyseur SCR d'un véhicule thermique du type à moteur diesel. Dans une autre application, le réservoir d'urée peut être configuré pour délivrer de l'urée à un électrolyseur, à un réacteur d'hydrolyse ou à une pile à combustible d'un véhicule électrique du type à pile à combustible.

Dans un véhicule du type autonome ou semi-autonome, outre les réservoirs de stockage d'un produit aqueux précédemment cités, on trouve aussi des réservoirs de produit aqueux pour nettoyer des capteurs tels que des LIDARs et des RADARs, le dispositif de chauffage bi-énergie, respectivement le dispositif anti-ballotement chauffant, trouve aussi son application dans ce type de réservoir.

## Revendications

1. Réservoir de stockage (2) d'un produit aqueux configuré pour délivrer un produit aqueux à un dispositif de consommation de produits aqueux d'un véhicule automobile, ledit véhicule automobile étant du type comprenant au moins un circuit de liquide de refroidissement et au moins une source d'énergie électrique, ledit réservoir de stockage (2) comprenant un dispositif de chauffage bi-énergie (1) configuré pour chauffer un produit aqueux contenu dans le réservoir de stockage (2), **caractérisé en ce que**
le dispositif de chauffage bi-énergie (1) comprend une plaque chauffante (10) dudit produit aqueux configurée pour être chauffée sélectivement soit par un premier moyen de chauffage (11), soit par un deuxième moyen de chauffage (12) distinct et indépendant dudit premier moyen de chauffage (11), soit à la fois par lesdits premier (11) et deuxième (12) moyens de chauffage, la plaque chauffante (10) comprenant le premier moyen de chauffage (11) et le deuxième moyen de chauffage (12),
**en ce que** ledit premier moyen de chauffage (11) est un circuit de chauffage hydraulique configuré pour être raccordé de manière étanche à un circuit de liquide de refroidissement du véhicule, et
**en ce que** ledit deuxième moyen de chauffage (12) est un circuit de chauffage électrique configuré pour être branché à une source d'énergie électrique du véhicule.

2. Réservoir de stockage (2) selon la revendication précédente, **caractérisé en ce que** ledit circuit de chauffage hydraulique (11) et ledit circuit de chauffage électrique (12) serpentent sur ladite plaque chauffante (10).

3. Réservoir de stockage (2) selon la revendication 1 ou 2, **caractérisé en ce que** ledit circuit de chauffage hydraulique (11) et ledit circuit de chauffage électrique (12) sont entrelacés.

4. Réservoir de stockage (2) selon l'une quelconque des revendications précédentes, **caractérisé en ce que** ladite plaque chauffante (10) est formée par l'assemblage d'une première tôle métallique (8) et d'une deuxième tôle métallique (9), et **en ce que** lesdits premier (11) et deuxième (12) moyens de chauffage sont pris en sandwich entre ladite première tôle métallique (8) et ladite deuxième tôle métallique (9).

5. Réservoir de stockage (2) selon la revendication précédente, **caractérisé en ce qu'**au moins une desdites première (8) et deuxième (9) tôles métalliques est emboutie pour former un premier conduit (11') et **en ce que** ledit circuit de chauffage hydraulique (11) comprend ledit premier conduit (11').

6. Réservoir de stockage (2) selon l'une quelconque des revendications 4 à 5, **caractérisé en ce qu'**au moins une desdites première (8) et deuxième (9) tôles métalliques est emboutie pour former un deuxième conduit (12') configuré pour loger ledit deuxième moyen de chauffage (12).

7. Réservoir de stockage (2) selon l'une quelconque des revendications précédentes, **caractérisé en ce que** ladite plaque chauffante (10) comprend un circuit de transfert hydraulique (13) configuré pour transférer du produit aqueux contenu dans le réservoir de stockage (2) vers un module (5) d'alimentation en produit aqueux d'un dispositif de consommation de produits aqueux d'un véhicule automobile.

8. Réservoir de stockage (2) selon la revendication précédente, **caractérisé en ce que** ledit circuit de transfert hydraulique (13) comprend un troisième conduit (13') et au moins un point d'aspiration (13a, 13b, 13c, 13d) configuré pour aspirer un produit aqueux contenu dans le réservoir de stockage (2).

9. Réservoir de stockage (2) selon la revendication précédente, **caractérisé en ce que** ledit circuit de transfert hydraulique (13) comprend un raccord hydraulique (14) configuré pour raccorder le au moins un point d'aspiration (13a, 13b, 13c, 13d) à une pompe d'aspiration (3).

10. Réservoir de stockage (2) selon l'une quelconque des revendications précédentes, **caractérisé en ce qu'**il comprend en outre des moyens de fixation (20) de ladite plaque chauffante (10) audit réservoir de stockage (2).

11. Réservoir de stockage (2) selon l'une quelconque des revendications précédentes, dans lequel le deuxième moyen de chauffage (12) comprend au moins une première zone de chauffage de la plaque chauffante (10) située à proximité d'au moins un premier point d'aspiration (13a) et au moins une deuxième zone de chauffage de la plaque chauffante (10) plus distante dudit au moins un premier point d'aspiration (13a) que la première zone et de préférence située à proximité d'au moins un deuxième point d'aspiration (13b), le deuxième moyen de chauffage (12) étant configuré pour que la puissance surfacique de chauffage instantanée du deuxième moyen de chauffage (12) soit plus importante dans la première zone que dans la deuxième zone.

## Patentansprüche

1. Speichertank (2) für ein wässriges Produkt, der ausgelegt ist zum Ausgeben eines wässrigen Produkts an eine Vorrichtung zum Verbrauchen von wässrigen Produkten eines Kraftfahrzeugs, wobei das Kraftfahrzeug des Typs ist, der wenigstens einen Kühlflüssigkeitskreislauf und wenigstens eine elektrische Energiequelle aufweist, wobei der Speichertank (2) eine Zweienergie-Heizvorrichtung (1) aufweist, die ausgelegt ist zum Aufheizen eines wässrigen Produkts, das in dem Speichertank (2) enthalten ist,
**dadurch gekennzeichnet, dass**
die Zweienergie-Heizvorrichtung (1) eine Heizplatte (10) für das wässrige Produkt aufweist, die ausgelegt ist, um selektiv entweder durch ein erstes Heizmittel (11) oder durch ein zweites Heizmittel (12), das von dem ersten Heizmittel (11) verschieden und unabhängig ist, oder gleichzeitig durch das erste Heizmittel (11) und das zweite Heizmittel (12) aufgeheizt zu werden, wobei die Heizplatte (10) das erste Heizmittel (11) und das zweite Heizmittel (12) aufweist, dass das erste Heizmittel (11) ein hydraulischer Heizkreislauf ist, der ausgelegt ist, um abdichtend mit einem Kühlflüssigkeitskreislauf des Fahrzeugs verbunden zu werden, und
dass das zweite Heizmittel (12) ein elektrischer Heizkreislauf ist, der ausgelegt ist, um an eine elektrische Energiequelle des Fahrzeugs angeschlossen zu werden.

2. Speichertank (2) nach dem vorhergehenden Anspruch, **dadurch gekennzeichnet, dass** der hydraulische Heizkreislauf (11) und der elektrische Heizkreislauf (12) auf der Heizplatte (10) serpentinenförmig angeordnet sind.

3. Speichertank (2) nach Anspruch 1 oder 2, **dadurch gekennzeichnet, dass** der hydraulische Heizkreislauf (11) und der elektrische Heizkreislauf (12) verschlungen sind.

4. Speichertank (2) nach einem der vorhergehenden Ansprüche, **dadurch gekennzeichnet, dass** die Heizplatte (10) durch das Zusammenfügen eines ersten Metallblechs (8) und eines zweiten Metallblechs (9) gebildet ist und dass das erste Heizmittel (11) und das zweite Heizmittel (12) zwischen dem ersten Metallblech (8) und dem zweiten Metallblech (9) sandwichartig in Eingriff genommen sind.

5. Speichertank (2) nach dem vorhergehenden Anspruch, **dadurch gekennzeichnet, dass** wenigstens eines von dem ersten Metallblech (8) und dem zweiten Metallblech (9) eingedrückt ist, um einen ersten Kanal (11') zu bilden, und dass der hydraulische Heizkreislauf (11) den ersten Kanal (11') aufweist.

6. Speichertank (2) nach einem der Ansprüche 4 bis 5, **dadurch gekennzeichnet, dass** wenigstens eines von dem ersten Metallblech (8) und dem zweiten Metallblech (9) eingedrückt ist, um einen zweiten Kanal (12') zu bilden, der ausgelegt ist, um das zweite Heizmittel (12) aufzunehmen.

7. Speichertank (2) nach einem der vorhergehenden Ansprüche, **dadurch gekennzeichnet, dass** die Heizplatte (10) einen hydraulischen Transferkreislauf (13) aufweist, der eingerichtet ist, um ein wässriges Produkt, das in dem Speichertank (2) enthalten ist, zu einem Modul (5) zum Versorgen einer Vorrichtung zum Verbrauchen von wässrigen Produkten eines Kraftfahrzeugs mit einem wässrigen Produkt zu transferieren.

8. Speichertank (2) nach dem vorhergehenden Anspruch, **dadurch gekennzeichnet, dass** der hydraulische Transferkreislauf (13) einen dritten Kanal (13') und wenigstens einen Ansaugpunkt (13a, 13b, 13c, 13d), der eingerichtet ist, um ein wässriges Produkt, das in dem Speichertank (2) enthalten ist, anzusaugen, aufweist.

9. Speichertank (2) nach dem vorhergehenden Anspruch, **dadurch gekennzeichnet, dass** der hydraulische Transferkreislauf (13) eine hydraulische Verbindung (14) aufweist, die eingerichtet ist, um den wenigstens einen Ansaugpunkt (13a, 13b, 13c, 13d) mit einer Ansaugpumpe (3) zu verbinden.

10. Speichertank (2) nach einem der vorhergehenden Ansprüche, **dadurch gekennzeichnet, dass** er ferner Mittel zum Befestigen (20) der Heizplatte (10) an dem Speichertank (2) aufweist.

11. Speichertank (2) nach einem der vorhergehenden Ansprüche, wobei das zweite Heizmittel (12) wenigstens eine erste Heizzone der Heizplatte (10), die sich in der Nähe von wenigstens einem ersten Ansaugpunkt (13a) befindet, und wenigstens eine zweite Heizzone der Heizplatte (10), die von wenigstens einem ersten Ansaugpunkt (13a) weiter entfernt ist als die erste Zone und sich bevorzugt in der Nähe von wenigstens einem zweiten Ansaugpunkt (13b) befindet, aufweist, wobei das zweite Heizmittel (12) so eingerichtet ist, dass die momentane flächige Heizleistung des zweiten Heizmittels (12) in der erste Zone größer ist als in der zweiten Zone.

## Claims

1. A storage tank (2) for an aqueous product configured to deliver an aqueous product to a device for consuming aqueous products of a motor vehicle, the said motor vehicle being of the type comprising at least one liquid coolant circuit and at least one source of electrical energy, said storage tank (2) comprising a dual-energy heating device (1) configured to heat an aqueous product contained in the storage tank (2), **characterized in that** the dual-energy heater (1) comprises a heating plate (10) for said aqueous product configured to be selectively heated either by a first heating means (11) or by a second heating means (12) separate and independent from said first heating means (11), or by both said first (11) and second (12) heating means, the heating plate (10) comprising the first heating means (11) and the second heating means (12),
**in that** said first heating means (11) is a hydraulic heating circuit configured to be sealingly connected to a liquid coolant circuit of the vehicle, and
**in that** said second heating means (12) is an electrical heating circuit configured to be connected to a source of electrical power of the vehicle.

2. The storage tank (2) according to the preceding claim, **characterized in that** said hydraulic heating circuit (11) and said electric heating circuit (12) wind over said heating plate (10).

3. The storage tank (2) according to claim 1 or 2, **characterized in that** said hydraulic heating circuit (11) and said electrical heating circuit (12) are intertwined.

4. The storage tank (2) according to any one of the preceding claims, **characterized in that** said heating plate (10) is formed by the assembly of a first metal sheet (8) and a second metal sheet (9), and **in that** said first (11) and second (12) heating means are sandwiched between said first metal sheet (8) and said second metal sheet (9).

5. The storage tank (2) according to the preceding claim, **characterized in that** at least one of said first (8) and second (9) metal sheets is stamped to form a first conduit (11') and **in that** said hydraulic heating circuit (11) comprises said first conduit (11').

6. The storage tank (2) according to any one of claims 4 to 5, **characterized in that** at least one of said first (8) and second (9) metal sheets is stamped to form a second conduit (12') configured to house said second heating means (12).

7. The storage tank (2) according to any one of the preceding claims, **characterized in that** said heating plate (10) comprises a hydraulic transfer circuit (13) configured to transfer aqueous product contained in the storage tank (2) to an aqueous product supply module (5) of an aqueous product consumption device of a motor vehicle.

8. The storage tank (2) according to the preceding claim, **characterized in that** said hydraulic transfer circuit (13) comprises a third conduit (13') and at least one suction point (13a, 13b, 13c, 13d) configured to suck an aqueous product contained in the storage tank (2).

9. The storage tank (2) according to the preceding claim, **characterized in that** said hydraulic transfer circuit (13) comprises a hydraulic connection (14) configured to connect the at least one suction point (13a, 13b, 13c, 13d) to a suction pump (3).

10. The storage tank (2) according to any one of the preceding claims, **characterized in that** it further comprises means (20) for fixing said heating plate (10) to said storage tank (2).

11. The storage tank (2) according to any one of the preceding claims, wherein the second heating means (12) comprises at least one first heating zone of the heating plate (10) located in the vicinity of at least one first suction point (13a) and at least one second heating zone of the heating plate (10) more distant from said at least one first suction point (13a) than the first zone and preferably located in the vicinity of at least one second suction point (13b), the second heating means (12) being configured such that the instantaneous heating surface power of the second heating means (12) is greater in the first zone than in the second zone.
